# EUROPEAN PATENT APPLICATION

(11) **EP 4 553 728 A1**
(43) Date of publication of application: **14.05.2025**
(21) Application number: 23857136.8
(22) Date of filing: 01.08.2023
(51) Int. Cl.: G06Q 10/0635

(54) **CALCULATOR SYSTEM AND SECURITY MEASURE EVALUATION METHOD**

(30) Priority: 24.08.2022 JP 2022133671
(71) Applicant: Hitachi Systems, Ltd., Tokyo 141-8672 (JP)
(72) Inventor: SATO Chinatsu, Tokyo 100-8280 (JP); IDEGUCHI Kota, Tokyo 100-8280 (JP); YAMAGUCHI Hiroshi, Tokyo 141-8672 (JP)
(74) Representative: Manitz Finsterwald Patent- und Rechtsanwaltspartnerschaft mbB
(86) International application number: PCT/JP2023/028171
(87) International publication number: WO 2024/043021

(57) **Abstract**

A computer system holds configuration management information for managing an element constituting an object to be analyzed for a security risk, and evaluation rule management information for managing an evaluation rule for calculating an index indicating effectiveness of a security measure to avoid a threat. The computer system identifies a threat to each element by using the configuration management information, stores an evaluation pair in which the element and the threat are associated, generates a security measure for the evaluation pair, aggregates evaluation pairs having the same generated security measure, calculates an index for each security measure by using the evaluation pair associated with the security measure and the evaluation rule management information, and generates display information for presenting the security measure and the index.

## Description

The present application claims the priority of Japanese Patent Application No. 2022-133671 filed on August 24, 2022, the entire contents of which are incorporated herein by reference.

### Technical Field

The present invention relates to a technique for evaluating security measures against a cyber security threat.

### Background Art

In recent years, measures against cyber security threats have become important in various industries. As a threat analysis method, the STRIDE method, the 5W method, and the like are known.

In general, the number of threats extracted by threat analysis is very large. Therefore, the number of security measures for each threat is also very large. However, from a perspective of the time and cost, it is difficult to take all security measures. Therefore, in practice, security measures to be implemented are narrowed down.

Conventionally, security measures against a threat having a high level of risk have been preferentially implemented. As a technique for evaluating the level of risk, for example, a technique disclosed in PTL 1 is known.

PTL 1 discloses that "a current status analysis input processing unit 11 inputs a question and an answer regarding a security measure, and if a weight of the answer is equal to or greater than a predetermined value, a vulnerability analysis unit 13 calculates, with reference to a vulnerability DB 23, a vulnerability value for each vulnerability based on vulnerability corresponding to an ID of the question, a weight of the vulnerability, and a corresponding asset value in an asset list input by an asset input processing unit 12. A threat analysis unit 14 calculates a threat value based on a threat corresponding to an ID of the vulnerability and a weight of the threat. A risk calculation unit 15 calculates a risk value for each vulnerability based on the asset value, the vulnerability value, and the threat value. A measure guideline creation unit 18 extracts a measure guideline corresponding to the vulnerability."

### Citation List

### Patent Literature

PTL 1: JP2005-135239A

### Summary of Invention

### Technical Problem

The threat and the security measure are not in a one-to-one relationship. Therefore, a plurality of threats may be avoided by implementing one security measure. Accordingly, even if the risk value of the threat is used, the effectiveness of the security measure cannot be evaluated.

The invention provides a technique for evaluating the effectiveness of a plurality of security measures and presenting a security measure having high effectiveness.

### Solution to Problem

A representative example of the invention disclosed in the present application is as follows. That is, a computer system includes at least one computer that includes a processor, a storage device connected to the processor, and a network interface connected to the processor. The computer system holds configuration management information for managing an element constituting an object to be analyzed for a security risk, and evaluation rule management information for managing an evaluation rule for calculating, based on a combination of the element and a threat to the element, an index indicating effectiveness of a security measure to avoid the threat. The processor performs threat analysis by using the configuration management information to identify the threat to each of a plurality of the elements, stores an evaluation pair, in which the element is associated with the threat, in the storage device, generates the security measure for the evaluation pair, stores the evaluation pair in the storage device in association with the security measure, aggregates the evaluation pairs associated with the same security measure, calculates the index for each security measure by using the evaluation pair associated with the security measure and the evaluation rule management information, and generates display information for presenting the security measure and the index.

### Advantageous Effects of Invention

According to the invention, the computer system can evaluate the effectiveness of a plurality of security measures and present a security measure having high effectiveness. Problems, configurations, and effects other than those described above will be clarified by description of the following embodiments.

### Brief Description of Drawings

[FIG. 1] FIG. 1 is a diagram illustrating a configuration example of a system according to Embodiment 1.
[FIG. 2] FIG. 2 is a diagram illustrating a configuration example of a computer according to Embodiment 1.
[FIG. 3] FIG. 3 is a table illustrating an example of a data structure of configuration management information according to Embodiment 1.
[FIG. 4] FIG. 4 is a table illustrating an example of a data structure of threat management information according to Embodiment 1.
[FIG. 5] FIG. 5 is a table illustrating an example of a data structure of measure management information according to Embodiment 1.
[FIG. 6] FIG. 6 is a table illustrating an example of a data structure of evaluation rule management information according to Embodiment 1.
[FIG. 7] FIG. 7 is a diagram illustrating an example of a screen presented by a security measure evaluation system according to Embodiment 1.
[FIG. 8] FIG. 8 is a flowchart illustrating an example of measure analysis processing executed by the security measure evaluation system according to Embodiment 1.
[FIG. 9] FIG. 9 is a table illustrating an example of a data structure of aggregation information generated by the security measure evaluation system according to Embodiment 1.
[FIG. 10] FIG. 10 is a diagram illustrating an example of an evaluation result presented by the security measure evaluation system according to Embodiment 1.
[FIG. 11] FIG. 11 is a flowchart illustrating an example of measure evaluation processing executed by the security measure evaluation system according to Embodiment 1.
[FIG. 12] FIG. 12 is a flowchart illustrating an example of measure evaluation processing executed by a security measure evaluation system according to Embodiment 2.
[FIG. 13] FIG. 13 is a diagram illustrating an example of an evaluation result presented by the security measure evaluation system according to Embodiment 2.
[FIG. 14] FIG. 14 is a diagram illustrating a configuration example of a system according to Embodiment 3.

### Description of Embodiments

Hereinafter, embodiments of the invention will be described with reference to the drawings. However, the invention is not to be construed as being limited to the description of the following embodiments. It will be easily understood by those skilled in the art that a specific configuration can be changed without departing from the spirit or scope of the invention.

In the configurations of the invention described below, the same or similar configurations or functions are denoted by the same reference signs, and a redundant description thereof will be omitted.

Notations "first", "second", "third", and the like in the present description and the like are provided to identify components, and do not necessarily limit the number or the order.

### Embodiment 1

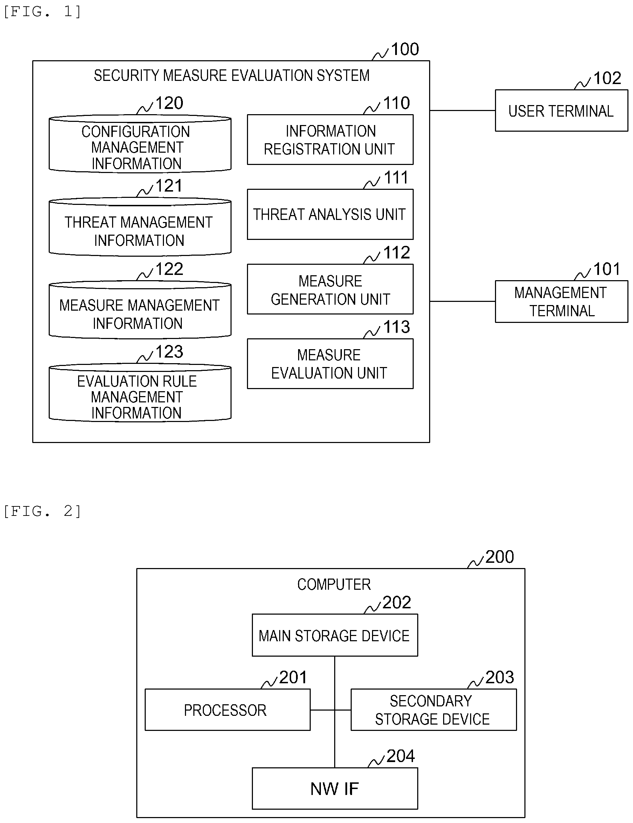

FIG. 1 is a diagram illustrating a configuration example of a system according to Embodiment 1. FIG. 2 is a diagram illustrating a configuration example of a computer according to Embodiment 1.

The system according to Embodiment 1 includes a security measure evaluation system 100, a management terminal 101, and a user terminal 102. The security measure evaluation system 100 is connected to the management terminal 101 and the user terminal 102 via a network (not illustrated) such as a local area network (LAN) and a wide area network (WAN).

The management terminal 101 is a terminal operated by a manager who operates the security measure evaluation system 100. The user terminal 102 is a terminal operated by a user who implements a security measure. The management terminal 101 and the user terminal 102 are, for example, general-purpose computers, tablet terminals, and smartphones.

The security measure evaluation system 100 evaluates the effectiveness of a security measure against a threat to an object to be evaluated. In the following description, the security measure is referred to as a measure.

The object may be a product such as an automobile or an electric appliance, a system such as a customer management system, or an application. The invention is not limited in the type of object.

The security measure evaluation system 100 includes, for example, a computer 200 as illustrated in FIG. 2. The security measure evaluation system 100 may include one computer 200, or the security measure evaluation system 100 may include two or more computers 200. The security measure evaluation system 100 may be implemented using a virtualization technology.

The computer 200 includes a processor 201, a main storage device 202, a secondary storage device 203, and a network interface 204. The hardware elements are connected to each other via a bus. The computer 200 may include an input device such as a keyboard, a mouse, and a touch panel, or may include an output device such as a display and a printer.

The processor 201 executes a program stored in the main storage device 202. The processor 201 executes processing according to a program to operate as a functional unit (module) that implements a specific function. In the following description, when the processing is described with the functional unit as a subject, it indicates that the processor 201 executes a program for implementing the functional unit.

The main storage device 202 is a storage device such as a dynamic random access memory (DRAM), and stores a program to be executed by the processor 201 and data used by the program. The main storage device 202 is also used as a work area. The secondary storage device 203 is a storage device such as a hard disk drive (HDD), a solid state drive (SSD), or the like, and permanently stores data.

The program and data stored in the main storage device 202 may be stored in the secondary storage device 203. In this case, the processor 201 reads the program and the data from the secondary storage device 203 and loads the program and the data into the main storage device 202.

The security measure evaluation system 100 includes an information registration unit 110, a threat analysis unit 111, a measure generation unit 112, and a measure evaluation unit 113. The security measure evaluation system 100 holds configuration management information 120, threat management information 121, measure management information 122, and evaluation rule management information 123.

The configuration management information 120 is information for managing an element constituting an object. The threat management information 121 is information for managing a threat to the object. The measure management information 122 is information for managing a measure for avoiding the threat. The evaluation rule management information 123 is information for managing a rule (evaluation rule) for evaluating effectiveness of the measure.

The information registration unit 110 provides an interface for inputting information related to a configuration of an object, an evaluation rule, and the like. The threat analysis unit 111 analyzes a threat to the object using the configuration management information 120, and outputs an analysis result to the threat management information 121. The measure generation unit 112 generates a measure for avoiding the threat by using the threat management information 121, and outputs information on the generated measure to the measure management information 122. The measure evaluation unit 113 evaluates the effectiveness of the measure by using the evaluation rule management information 123.

Regarding each functional unit of the security measure evaluation system 100, a plurality of functional units may be integrated into one functional unit, or one functional unit may be divided into a plurality of functional units for each function.

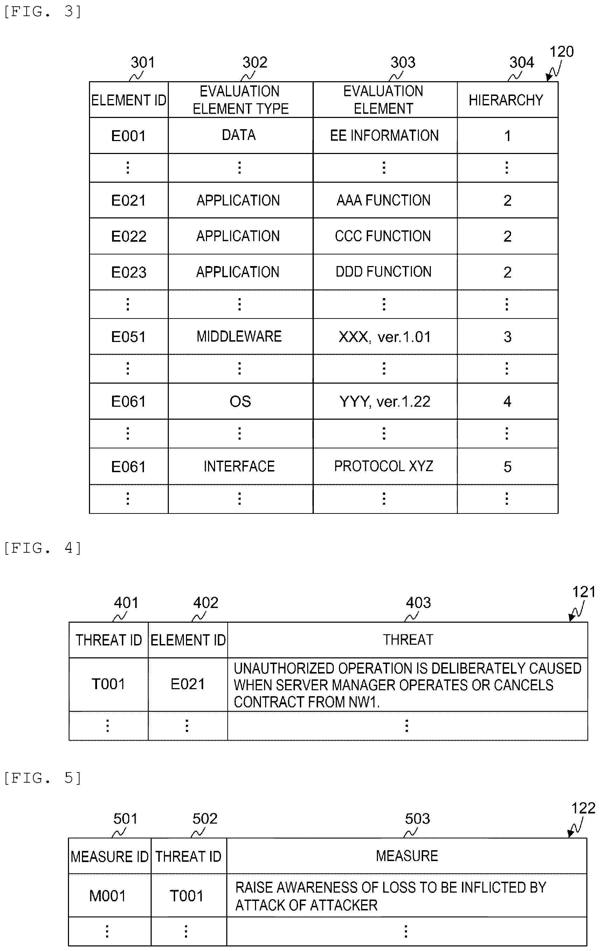

FIG. 3 is a table illustrating an example of a data structure of the configuration management information 120 according to Embodiment 1.

The configuration management information 120 stores an entry including an element ID 301, an evaluation element type 302, an evaluation element 303, and a hierarchy 304. One entry exists for one element. The fields included in the entry are not limited to those described above.

The element ID 301 is a field for storing identification information of an element. The evaluation element type 302 is a field for storing a type of the element. The evaluation element 303 is a field for storing the element. The hierarchy 304 is a field for storing a hierarchy of the element in an object. The hierarchy of the element is an example of information indicating importance of the element.

The information registration unit 110 displays, on the user terminal 102, a screen for inputting information related to the configuration of an object. The user inputs information related to the configuration of the object by using the user terminal 102. The information registration unit 110 registers the information input by the user in the configuration management information 120. The configuration of the object may be registered by a manager who gathers information from the user.

FIG. 4 is a table illustrating an example of a data structure of the threat management information 121 according to Embodiment 1.

The threat management information 121 stores an entry including a threat ID 401, an element ID 402, and a threat 403. One entry exists for a combination of an element and a threat. In the following description, the combination of an element and a threat is referred to as an evaluation pair. The fields included in the entry are not limited to those described above.

The threat ID 401 is a field for storing identification information of an evaluation pair. The element ID 402 is a field for storing identification information of an element to be subjected to a threat. The element ID 402 stores identification information set in the element ID 301. The threat 403 is a field for storing specific contents of the threat.

FIG. 5 is a table illustrating an example of a data structure of the measure management information 122 according to Embodiment 1.

The measure management information 122 stores an entry including a measure ID 501, a threat ID 502, and a measure 503. One entry exists for a combination of the entry of the threat management information 121 and a measure. The fields included in the entry are not limited to those described above.

The measure ID 501 is a field for storing identification information of an entry. The threat ID 502 is a field for storing identification information of an evaluation pair associated with a measure. The identification information set in threat ID 401 is stored in the threat ID 502. The measure 503 is a field for storing specific contents of the measure.

In the measure management information 122, there are entries that have different evaluation pairs but a coincident measure.

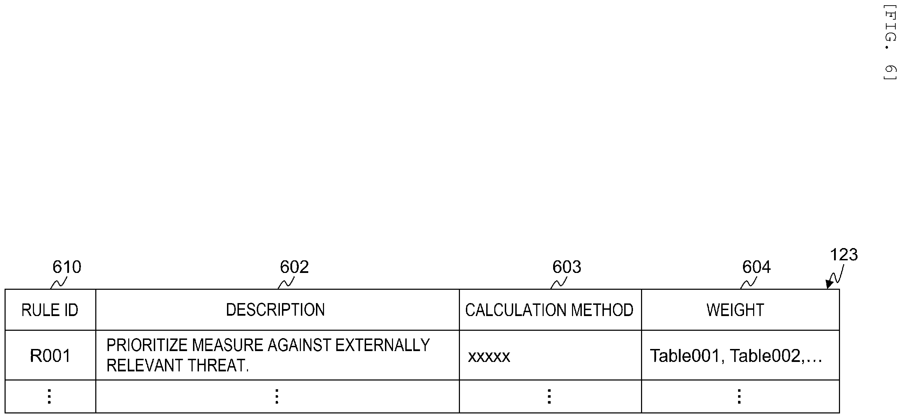

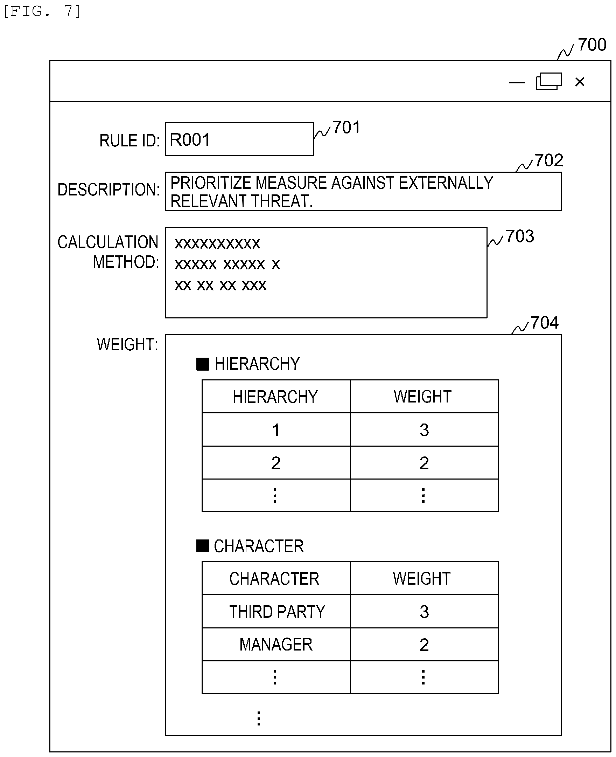

FIG. 6 is a table illustrating an example of a data structure of the evaluation rule management information 123 according to Embodiment 1. FIG. 7 is a diagram illustrating an example of a screen presented by the security measure evaluation system 100 according to Embodiment 1.

The evaluation rule management information 123 stores an entry including a rule ID 601, a description 602, a calculation method 603, and a weight 604. One entry exists for one evaluation rule. The fields included in the entry are not limited to those described above.

The rule ID 601 is a field for storing identification information of an evaluation rule. The description 602 is a field for storing a description relating to a viewpoint of the evaluation rule and the like. The calculation method 603 stores a method of calculating an index (effective degree) indicating effectiveness of a measure. The calculation method 603 stores data to be used and information related to a calculation formula and the like. The weight 604 is a field for storing a weight used for calculating the effective degree.

The information registration unit 110 displays, on the management terminal 101, a screen 700 for inputting information related to the evaluation rule. The screen 700 includes input fields 701, 702, 703, and 704.

The input field 701 is a field for inputting identification information of a rule. The identification information of the rule may be automatically given by the security measure evaluation system 100. The input field 702 is a field for inputting a description. The input field 703 is a field for inputting a calculation method. The input field 704 is a field for inputting a weight.

For example, it is conceivable to set weights related to a hierarchy of an element, contents of a threat, a development cost, an implementation timing of a measure, influence of the measure, and the like.

The manager inputs various types of information on the screen 700 by using the management terminal 101. The information registration unit 110 registers the information input by the manager in the evaluation rule management information 123. The evaluation rule may be registered by the user or may be adjusted by the user.

In Embodiment 1, it is assumed that the following calculation methods are set.

(Method 1) The effective degree is calculated based on the number of evaluation pairs associated with a measure.

(Method 2) The effective degree is calculated based on a risk value of a threat constituting an evaluation pair associated with a measure.

(Method 3) The effective degree is calculated based on importance of an element constituting an evaluation pair associated with a measure.

Even with the same calculation method, various evaluation rules can be set by adjusting the calculation formula and the weight according to the evaluation viewpoint. The effective degree may be calculated by combining these methods.

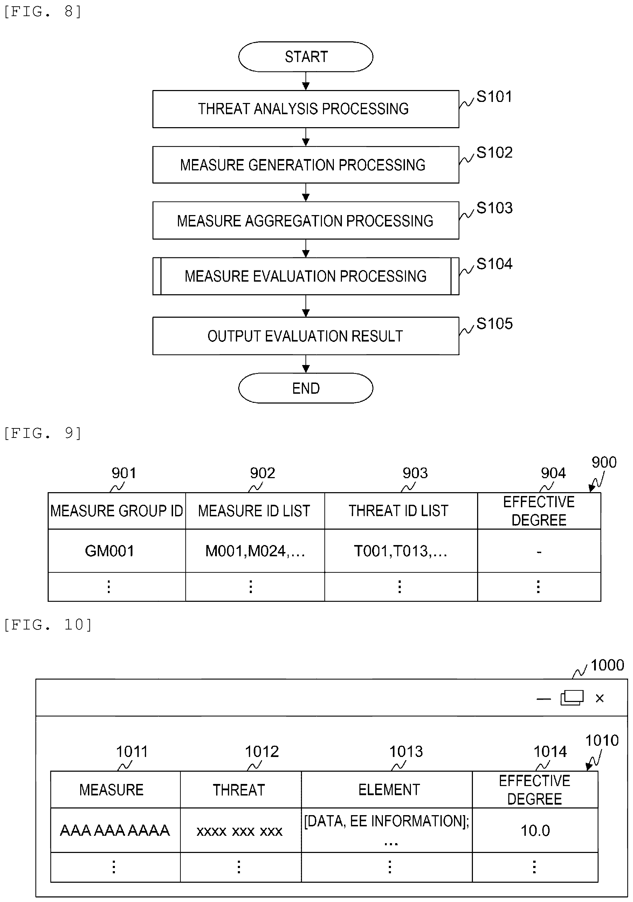

FIG. 8 is a flowchart illustrating an example of measure analysis processing executed by the security measure evaluation system 100 according to Embodiment 1. FIG. 9 is a table illustrating an example of a data structure of aggregation information generated by the security measure evaluation system 100 according to Embodiment 1. FIG. 10 is a diagram illustrating an example of an evaluation result presented by the security measure evaluation system 100 according to Embodiment 1.

When an execution trigger is received, the security measure evaluation system 100 starts the measure analysis processing described below. The execution trigger is, for example, reception of an execution instruction transmitted from the user terminal 102 and registration of the configuration management information 120. In Embodiment 1, it is assumed that the evaluation rule to be used is designated in advance.

The threat analysis unit 111 of the security measure evaluation system 100 executes threat analysis processing by using the configuration management information 120 (step S101). For example, the threat analysis unit 111 analyzes a threat to an object by using the STRIDE method, the 5W method, or the like. Since the threat analysis method is a known technique, a detailed description thereof will be omitted. The threat analysis unit 111 registers a processing result in threat management information 121.

The measure generation unit 112 of the security measure evaluation system 100 executes measure generation processing for generating a measure to avoid a threat in each entry of the threat management information 121 (step S102). For example, the measure generation unit 112 specifies a factor by executing fault tree analysis, and generates a measure for eliminating the specified factor.

The measure evaluation unit 113 of the security measure evaluation system 100 executes measure aggregation processing (step S103).

Specifically, the measure evaluation unit 113 aggregates evaluation pairs for each measure of the same content, and generates aggregation information 900. The aggregation information 900 stores an entry including a measure group ID 901, a measure ID list 902, a threat ID list 903, and an effective degree 904. One entry exists for one measure.

The measure group ID 901 is a field for storing identification information of a measure. The measure ID list 902 is a field for storing identification information of entries (evaluation pairs) in the measure management information 122 for which a measure of the same content is set. The threat ID list 903 is a field for storing identification information of a threat against which the measure is implemented. The effective degree 904 is a field for storing an effective degree of the measure.

The measure evaluation unit 113 refers to the measure 503 of each entry in the measure management information 122, extracts entries in which the same measure is set, and generates a group. The measure evaluation unit 113 adds one entry to the aggregation information 900 for one group. The measure evaluation unit 113 sets identification information (measure ID 501) of the entries constituting the group in the measure ID list 902. The measure evaluation unit 113 sets the threat ID 502 of the entries constituting the group in the threat ID list 903. At this time, the effective degree 904 is blank.

The measure evaluation unit 113 of the security measure evaluation system 100 executes measure evaluation processing (step S104). Details of the measure evaluation processing will be described later.

The measure evaluation unit 113 of the security measure evaluation system 100 outputs an evaluation result to the user terminal 102 (step S105), and then ends the processing.

For example, a screen 1000 as illustrated in FIG. 10 is displayed on the user terminal 102. A table 1010 is displayed on the screen 1000. The table 1010 displays an entry including a measure 1011, a threat 1012, an element 1013, and an effective degree 1014.

The measure 1011 is a field for displaying contents of a measure. The threat 1012 is a field for displaying contents of a threat. The element 1013 is a field for displaying an element to be subjected to a threat. The effective degree 1014 is a field for displaying an effective degree of the measure.

The measure evaluation unit 113 generates display information for displaying the table 1010 by using the aggregation information 900, the configuration management information 120, the threat management information 121, and the measure management information 122. At this time, the measure evaluation unit 113 preferentially presents a measure having high effectiveness based on the effective degree. For example, the entries are sorted in descending order of the effective degree. Only measures with an effective degree larger than a threshold may be presented.

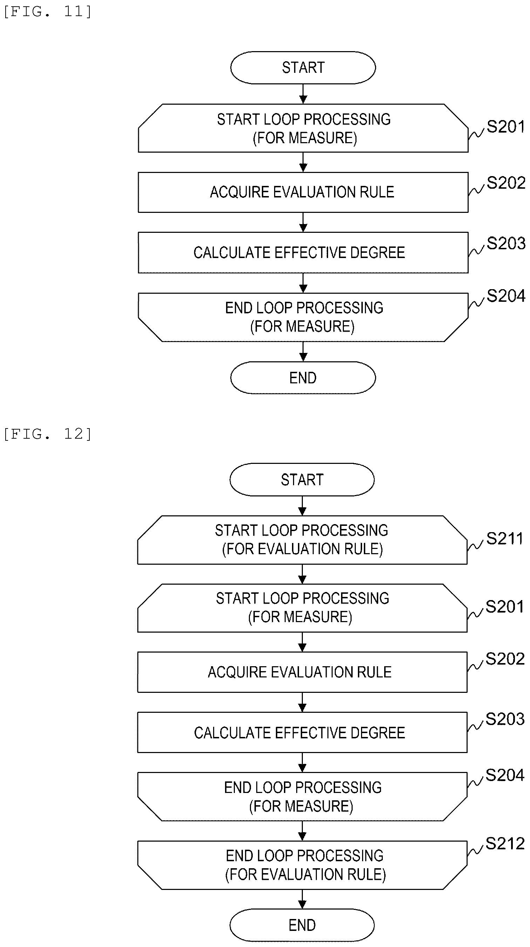

FIG. 11 is a flowchart illustrating an example of the measure evaluation processing executed by the security measure evaluation system 100 according to Embodiment 1.

The measure evaluation unit 113 starts loop processing for measures (step S201). Specifically, the measure evaluation unit 113 selects one entry from the aggregation information 900.

The measure evaluation unit 113 acquires an evaluation rule to be used from the evaluation rule management information 123 (step S202).

The measure evaluation unit 113 calculates an effective degree of a measure based on an evaluation pair associated with the measure (step S203). At this time, the measure evaluation unit 113 sets the calculated effective degree in the effective degree 904 of the entry corresponding to the selected measure in the aggregation information 900.

In the case of Method 1, for example, the measure evaluation unit 113 calculates, as the effective degree, the number of evaluation pairs associated with the measure. In the case of Method 2, for example, the measure evaluation unit 113 calculates, as the effective degree, a sum of risk values of threats constituting respective evaluation pairs associated with the measure. A sum of the risk values multiplied by respective weights may be used. In the case of Method 3, for example, the measure evaluation unit 113 calculates, as the effective degree, a sum of weights of elements constituting respective evaluation pairs associated with the measure.

The measure evaluation unit 113 determines whether the processing is completed for all measures (step S204).

If the processing is not completed for all measures, the measure evaluation unit 113 returns to step S201. If the processing is completed for all measures, the measure evaluation unit 113 ends the measure evaluation processing.

According to Embodiment 1, the security measure evaluation system 100 can calculate the effective degree of the measure. The security measure evaluation system 100 can present a measure having high effectiveness to the user based on priority.

### Embodiment 2

Embodiment 2 is different from Embodiment 1 in processing contents of the measure evaluation processing. Hereinafter, Embodiment 2 will be described focusing on a difference from Embodiment 1.

A system configuration according to Embodiment 2 is the same as that of Embodiment 1. A configuration of the security measure evaluation system 100 according to Embodiment 2 is the same as that of Embodiment 1. A flow of measure analysis processing executed by the security measure evaluation system 100 according to Embodiment 2 is the same as that of Embodiment 1.

In Embodiment 2, the contents of the measure evaluation processing are partially different. FIG. 12 is a flowchart illustrating an example of the measure evaluation processing executed by the security measure evaluation system 100 according to Embodiment 2.

In Embodiment 2, a measure is evaluated using all evaluation rules. Specifically, the measure evaluation unit 113 of the security measure evaluation system 100 starts loop processing for an evaluation rule (step S211). Specifically, the measure evaluation unit 113 selects one entry from the evaluation rule management information 123.

The measure evaluation unit 113 executes processing of step S201 to step S204 using the selected evaluation rule. The processing of step S201 to step S204 is the same as that in Embodiment 1.

If it is determined in the processing of step S204 that the processing is completed for all measures, the measure evaluation unit 113 stores the aggregation information 900 associated with identification information of the evaluation rule in the work area, and then determines whether the processing is completed for all the evaluation rules (step S212).

If the processing is not completed for all evaluation rules, the measure evaluation unit 113 returns to step S211. At this time, the measure evaluation unit 113 initializes the effective degree 904 in the aggregation information 900. If the processing is completed for all evaluation rules, the measure evaluation unit 113 ends the measure evaluation processing.

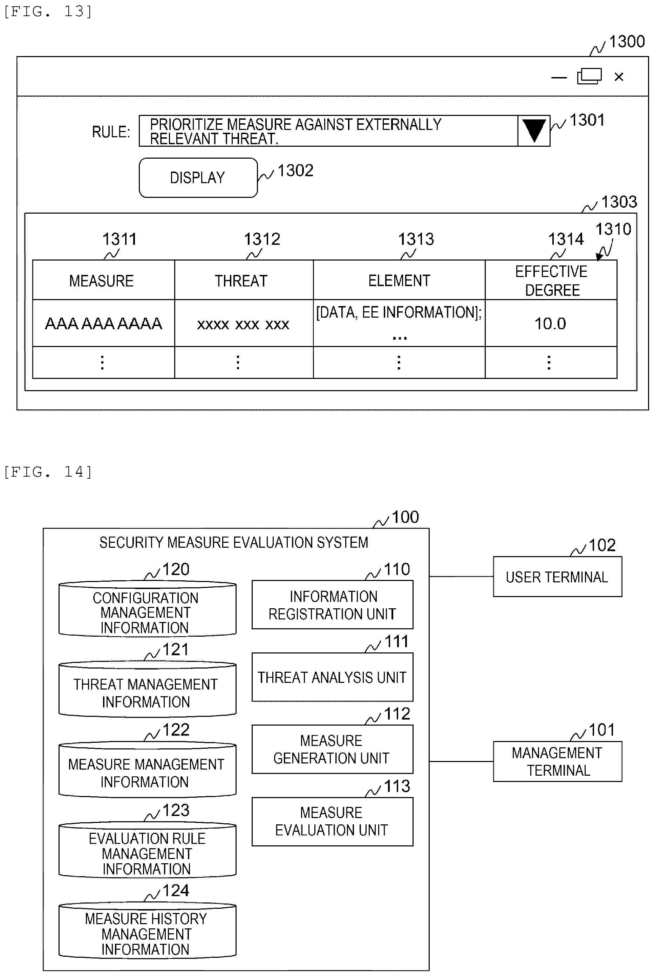

The security measure evaluation system 100 according to Embodiment 2 displays a screen 1300 as illustrated in FIG. 13 in step S105. The screen 1300 includes a selection field 1301, a display button 1302, and a display field 1303. The selection field 1301 is a field for selecting an evaluation rule. In the selection field 1301, contents, identification information, and the like of the evaluation rule are displayed in a pull-down format. The display button 1302 is an operation button for displaying the effective degree of a measure based on the evaluation rule selected in the selection field 1301. The display field 1303 is a field for displaying the effective degree of the measure based on the evaluation rule selected in the selection field 1301. A table 1310 is displayed in the display field 1303. The table 1310 displays an entry including a measure 1311, a threat 1312, an element 1313, and an effective degree 1314. The measure 1311, the threat 1312, the element 1313, and the effective degree 1314 are the same fields as the measure 1011, the threat 1012, the element 1013, and the effective degree 1014.

When the display button 1302 is operated, the security measure evaluation system 100 acquires the aggregation information 900 associated with the identification information of the selected evaluation rule from the work area, and generates display information for displaying the table 1310 by using the aggregation information 900, the configuration management information 120, the threat management information 121, and the measure management information 122.

According to Embodiment 2, the security measure evaluation system 100 can present the effective degree of a measure based on various evaluation rules (evaluation viewpoints). Accordingly, the user can grasp the effectiveness of the measure from various evaluation viewpoints.

### Embodiment 3

In Embodiment 3, the security measure evaluation system 100 calculates an effective degree in consideration of the presence or absence of implementation of a measure. Hereinafter, Embodiment 3 will be described focusing on a difference from Embodiment 1.

FIG. 14 is a diagram illustrating a configuration example of a system according to Embodiment 3.

The security measure evaluation system 100 according to Embodiment 3 holds measure history management information 124. The measure history management information 124 is information for managing a history of an implemented measure. The measure history management information 124 stores a history including identification information, implementation date and time, and the like of the implemented measure.

A flow of measure analysis processing executed by the security measure evaluation system 100 according to Embodiment 3 is the same as that of Embodiment 1. A flow of measure evaluation processing executed by the security measure evaluation system 100 according to Embodiment 3 is the same as that of Embodiment 1.

However, in Embodiment 3, a calculation method for the effective degree is different. In Embodiment 3, the measure evaluation unit 113 calculates the effective degree of a measure based on an evaluation pair associated with the measure. Further, the measure evaluation unit 113 refers to the measure history management information 124 and determines whether the selected measure is implemented. If the selected measure is implemented, the measure evaluation unit 113 corrects the effective degree by multiplying the effective degree by a coefficient smaller than 1. That is, the correction is performed so as to reduce the effective degree of the implemented measure.

According to Embodiment 3, the security measure evaluation system 100 can present a measure, which is not implemented and has high effectiveness, to a user.

The invention is not limited to the embodiments described above, and includes various modifications. For example, the embodiments described above are described in detail to facilitate understanding of the invention, and the invention is not necessarily limited to those including all the described configurations. A part of a configuration in each embodiment may be added to, deleted from, or replaced with another configuration.

A part or all of the configurations, functions, processing units, processing methods, and the like described above may be implemented by hardware by, for example, designing with an integrated circuit. The invention can also be implemented by a program code of software for implementing functions of the embodiments. In this case, a storage medium storing the program code is provided to a computer, and a processor provided in the computer reads the program code stored in the storage medium. In this case, the program code read from the storage medium implements the functions of the embodiments described above, and the program code and the storage medium storing the program code implement the invention. Examples of the storage medium for supplying such a program code include a flexible disk, a CD-ROM, a DVD-ROM, a hard disk, a solid state drive (SSD), an optical disk, a magneto-optical disk, a CD-R, a magnetic tape, a nonvolatile memory card, and a ROM.

Further, the program code for implementing the functions described in the present embodiment can be implemented in a wide range of programs or script languages such as assembler, C/C++, Perl, Shell, PHP, Python, and Java.

Further, the program code of software for implementing the functions of the embodiments may be distributed via a network to be stored in a storage unit such as a hard disk or a memory of a computer or a storage medium such as a CD-RW or a CD-R, and a processor provided in the computer may read and execute the program code stored in the storage unit or the storage medium.

Control lines and information lines considered to be necessary for description are shown in the embodiments described above, and not all control lines and information lines in a product are necessarily illustrated. All components may be connected to one another.

## Claims

1. A computer system comprising:
at least one computer that includes a processor, a storage device connected to the processor, and a network interface connected to the processor, wherein
the computer system holds configuration management information for managing an element constituting an object to be analyzed for a security risk, and evaluation rule management information for managing an evaluation rule for calculating, based on a combination of the element and a threat to the element, an index indicating effectiveness of a security measure to avoid the threat, and
the processor
performs threat analysis by using the configuration management information to identify the threat to each of a plurality of the elements, and stores an evaluation pair, in which the element is associated with the threat, in the storage device,
generates the security measure for the evaluation pair, and stores the evaluation pair in the storage device in association with the security measure,
aggregates evaluation pairs associated with a same security measure,
calculates the index for each security measure by using the evaluation pair associated with the security measure and the evaluation rule management information, and
generates display information for presenting the security measure and the index.

2. The computer system according to claim 1, wherein
the evaluation rule is a rule for calculating the index by using at least one of the number of evaluation pairs associated with the security measure, a risk value indicating a level of risk of the threat constituting the evaluation pair associated with the security measure, and importance of the element constituting the evaluation pair associated with the security measure.

3. The computer system according to claim 2, wherein
the processor
calculates the index by using each evaluation rule registered in the evaluation rule management information, and
generates the display information for each evaluation rule.

4. The computer system according to claim 2, wherein
the computer system holds history information for managing the security measure implemented to the object, and
the processor
refers to the history information to determine whether the security measure is implemented, and
corrects the index to reduce the effectiveness of the security measure when the security measure is implemented.

5. A security measures evaluation method to be executed by a computer system,
the computer system including at least one computer that includes a processor, a storage device connected to the processor, and a network interface connected to the processor, and
the computer system holding configuration management information for managing an element constituting an object to be analyzed for a security risk, and evaluation rule management information for managing an evaluation rule for calculating, based on a combination of the element and a threat to the element, an index indicating effectiveness of a security measure to avoid the threat,
the security measures evaluation method comprising:
a first step of the processor performing threat analysis using the configuration management information to identify the threat to each of a plurality of the elements, and storing an evaluation pair, in which the element is associated with the threat, in the storage device;
a second step of the processor generating the security measure for the evaluation pair, and storing the evaluation pair in the storage device in association with the security measure;
a third step of the processor aggregating evaluation pairs associated with a same security measure;
a fourth step of the processor calculating the index for each security measure by using the evaluation pair associated with the security measure and the evaluation rule management information; and
a fifth step of the processor generating display information for presenting the security measure and the index.

6. The security measures evaluation method according to claim 5, wherein
the evaluation rule is a rule for calculating the index by using at least one of the number of evaluation pairs associated with the security measure, a risk value indicating a level of risk of the threat constituting the evaluation pair associated with the security measure, and importance of the element constituting the evaluation pair associated with the security measure.

7. The security measures evaluation method according to claim 6, wherein
the fourth step includes the processor calculating the index by using each evaluation rule registered in the evaluation rule management information, and
the fifth step includes the processor generating the display information for each evaluation rule.

8. The security measures evaluation method according to claim 6, wherein
the computer system holds history information for managing the security measure implemented to the object, and
the fourth step includes
the processor referring to the history information to determine whether the security measure is implemented, and
the processor correcting the index to reduce the effectiveness of the security measure when the security measure is implemented.
